# EUROPÄISCHE PATENTANMELDUNG

(11) **EP 0 926 318 A1**
(43) Veröffentlichungstag der Anmeldung: **30.06.1999**
(21) Anmeldenummer: 97811026.0
(22) Anmeldetag: 24.12.1997
(51) Int. Cl.: F01K 23/10

(54) **Kühlsystem für die Gasturbine einer kombinierten Kraftwerksanlage**

(71) Anmelder: Asea Brown Boveri AG, 5401 Baden (CH)
(72) Erfinder: Endres, Wilhelm, Dr., 5453 Remetschwil (CH); Wettstein, Hans, Dr., 5442 Fislisbach (CH)
(74) Vertreter: Klein, Ernest

(57) **Zusammenfassung**

Bei einer kombinierten Kraftwerksanlage mit einer Gasturbine (2-4) und einer Dampfturbine (9-11) geben die Abgase der Gasturbine (4) ihre Restwärme über das in einem Abhitzekessel (7) strömende Arbeitsmittel an die Dampfturbine ab. Den zu kühlenden Gasturbinenkomponenten wird in einem geschlossenen Primärkühlkreislauf (32, 34) Anzapfdampf aus der Dampfturbine zugeführt. Die Anlage weist mindestens einen weiteren Sekundärkühlkreis (36-38, 44,45, 46-48) auf, der in Wirkverbindung mit dem Primärkühlkreislauf (32, 34) steht und bei Ausfall dieses Primärkühlkreislaufes betrieben wird. Stromabwärts der zu kühlenden Gasturbinenkomponenten sind Mittel zum getrennten Abführen des Kühlmittels vorgesehen, welche zum Kondensator (13) der Dampfturbine oder zur Atmosphäre führen.
Der Sekundärkühlkreis umfasst entweder eine vom Kessel (7) abzweigende, absperrbare Kühldampfleitung (44), oder einen Hilfsdampferzeuger (36) mit einer absperrbaren Leitung (38), oder eine absperrbare Kühlluftleitung (46), wobei die Leitungen (44, 38, 46) mit der Kühlzuleitung (32) des Primärkühlkreislaufes verbunden sind.

## Beschreibung

### Technisches Gebiet

Die Erfindung betrifft eine kombinierte Kraftwerksanlage mit einer Gasturbine und einer Dampfturbine, bei welcher die Abgase der Gasturbine ihre Restwärme über das in einem Abhitzekessel strömende Arbeitsmittel an die Dampfturbine abgeben, und wobei den zu kühlenden Gasturbinenkomponenten in einem zumindest vorzugsweise geschlossenen Primärkühlkreislauf Anzapfdampf aus der Dampfturbine zugeführt wird.

### Stand der Technik

Gasturbinen der modernen Generation und der oberen Leistungsklasse arbeiten mit sehr hohen Turbinen-Eintrittstemperaturen, was eine Kühlung der Brennkammer, der Rotoren und der Beschaufelung unumgänglich macht. Hierfür wird in der Regel hochverdichtete Luft am Verdichteraustritt sowie ggfs. aus einer niedrigeren Druckstufe abgezogen. Da ein sehr hoher Anteil der verdichteten Luft für die heutige übliche Vormischverbrennung gebraucht wird, verbleibt einerseits für Kühlzwecke nur ein Minimum an Kühlluft. Anderseits ist diese für die Kühlung bestimmte Luft infolge der Verdichtung bereits sehr heiss, weshalb sich deren vorgängige Kühlung empfiehlt. Es empfiehlt sich somit bei Kombianlagen eine Dampfkühlung der Gasturbinenkomponenten der oben genannten Art. In Fällen jedoch, in denen infolge Stillstandes der Dampfturbine kein Kühldampf zur Verfügung steht, muss in der Regel auch die Gasturbine stillgesetzt werden, sofern diese nur für Dampfkühlung ausgerüstet ist.

### Darstellung der Erfindung

Der Erfindung liegt die demnach Aufgabe zugrunde, bei einer kombinierten Kraftwerksanlage der eingangs genannten Art ein Kühlsystem zu schaffen, welches bei Ausfall der Dampfturbine ein Weiterfahren der Gasturbine gestattet.

Erfindungsgemäss wird dies mit den kennzeichnenden Merkmalen der Patentansprüche erreicht.

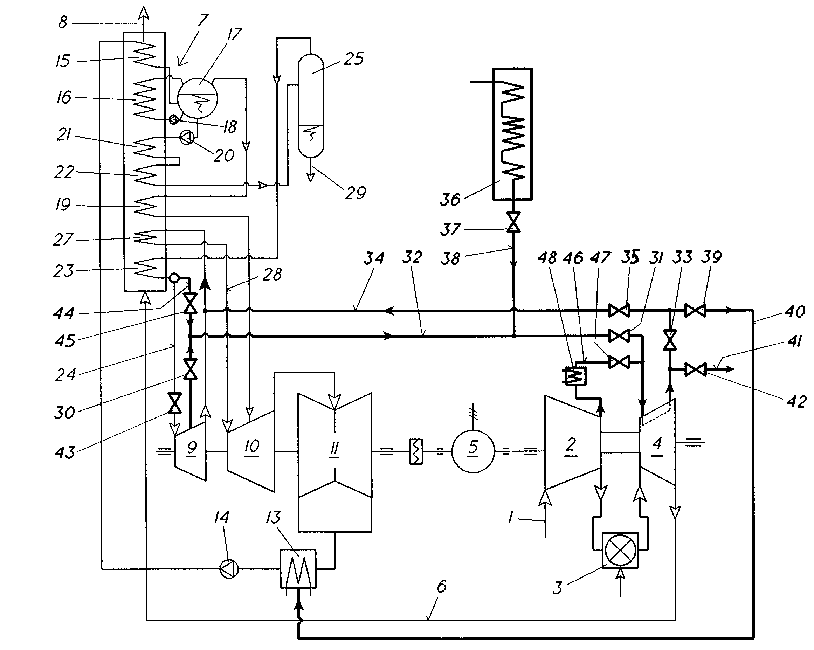

### Kurze Beschreibung der Zeichnung

In der Zeichnung ist ein Ausführungsbeispiel der Erfindung schematisch dargestellt. Die Strömungsrichtung der Arbeitsmittel ist mit Pfeilen dargestellt, jene der zu Kühlzwecken verwendeten Mittel mit vollausgezogenen Pfeilen.

### Weg zur Ausführung der Erfindung

In der kombinierten Gas-Dampf-Kraftwerksanlage gemäss der einzigen Figur wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert. Bemerkenswert ist, dass die Anlage keine, in der Regel entnahmedampfbeheizte Niederdruckeconomiser, Speisewasserbehälter und Hochdruckeconomiser aufweist. Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen.

Das Niederdrucksystem ist als Umlaufssystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt. Zur Phasentrennung ist eine Abscheideflasche 25 vorgesehen, in welche der Austritt des Hochdruckverdampfers 22 mündet. Die Abscheideflasche ist an ihrem obereren Ende mit dem Hochdrucküberhitzer 23 verbunden. An ihrem unteren Ende ist sie mit einer Abschlämmleitung 29 versehen.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Durch Variation der Drücke und Massenströme im Umlaufsystem und im Durchlaufsystem kann mit einem solchen Dampferzeuger ein weiter Bereich von Kombiprozessen abgedeckt werden. Mit dem Erreichen der jeweiligen Siedetemperaturen beginnt im Kessel die Dampfproduktion. Der erste Dampf im Niederdrucksystem kann durch Entspannung von rezirkuliertem (nicht dargestellt) Hochdruck-Sattwassers aus der Abscheideflasche erzeugt werden.

Die genannte Abscheideflasche 25 sorgt dafür, dass der Hochdrucküberhitzer jederzeit trocken bleibt und am Kesselaustritt frühzeitig überhitzter Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Bei Anwendung von Dampfkühlung der verschiedenen Gasturbinenkomponenten ist während des Normalbetriebes der Anlage der geschlossene, sogenannte Primärkühlkreislauf aufgeschaltet. Hierbei wird bei geöffnetem Isolations-Ventil 30 und geöffnetem Einlassventil 31 über die Kühlzuleitung 32 den Kühlstellen der Gasturbine Anzapfdampf aus der Hochdruckturbine 9 zugeführt. Das durch Wärmeaufnahme an den Kühlstellen erhitzte Kühlmittel wird bei geöffnetem Auslassventil 33 über die Kühlableitung 34 dem Abdampfstrom aus der Hochdruckturbine 9 beigemischt. Hierzu ist das in der Kühlableitung 34 angeordnete Isolations-Ventil 35 selbstverständlich geöffnet.

Aus dem Obigen ergibt sich, dass beispielsweise beim Anfahren der Anlage Zustände vorherrschen, bei denen entweder kein Dampf oder nur solcher mit ungenügenden Parametern für die unbedingt erforderliche Kühlung der Gasturbinenkomponenten zur Verfügung steht. Abhilfe schafft dann die Entnahme von Kühlmittel aus einem Sekundärkühlkreis, der in Wirkverbindung mit dem Primärkühlkreislauf steht. Dieser Sekundärkühlkreis soll ausserdem bei Ausfall des Primärkühlkreislaufes über eine Schnellumschaltung betrieben werden können. Stromabwärts der zu kühlenden Gasturbinenkomponenten sind anlässlich des Betriebes des Sekundärkühlkreises getrennte Mittel zum Abführen des Kühlmittels angeordnet.

Eine erste Variante sieht die Entnahme von Kühldampf aus einem separaten Hilfsdampferzeuger 36 vor. Bei diesem Dampferzeuger kann es sich um einen befeuerten Kessel handeln, der mit Speisewasser aus dem Hauptsystem beaufschlagt sein kann oder um einen elektrisch beheizten Kessel. Der Kühldampf wird bei offenem Absperrventil 37 über eine Leitung 38 in die Kühlzuleitung 32 eingeführt. Es versteht sich, dass in diesem Fall das Isolations-Ventil 30 in der Anzapfung der Hochdruckturbine 9 geschlossen ist. Für die Abfuhr dieses Hilfsdampfes sind mehrere Möglichkeiten vorgesehen: Wurde für die Hilfsdampferzeugung Speisewasser aus dem Hauptsystem entnommen, dann ist es sinnvoll, den Dampf wieder in das Hauptsystem zurückzuführen (nicht dargestellt). Dies kann beispielsweise in die Niederdrucktrommel 17 des Abhitzedampferzeugers 7 erfolgen. Ist die Kapazität dieser Trommel beschränkt, so bietet es sich an, den Dampf in den Kondensator 13 zu befördern, sofern dieser betriebsbereit ist. Hierzu ist die Kühlableitung 34 mit einer zum Kondensator abzweigenden, mit einem offenen Absperrventil 39 versehenen Leitung 40 ausgerüstet. In dieser Leitung 40 sind nicht dargestellte Wassereinspritzmittel zur Senkung der Dampftemperatur angeordnet. Steht der Kondensator nicht unter Vakuum, so muss der Kühldampf schliesslich verworfen werden. Hierzu zweigt stromaufwärts des Auslassventils 33 eine mit einem Absperrventil 42 ausgerüstete Leitung 41 ab, die in die Atmosphäre münden kann. Beim Verwerfen des Dampfes ist das Absperrventil 42 geöffnet, das Auslassventils 33 geschlossen. Alle 3 genannten Lösungen haben gemeinsam, dass das Isolations-Ventil 35 in der Kühlableitung 34 jeweils geschlossen ist.

Bei einem weiteren Betriebsfall, bei welchem die Dampfturbine 9-11 aus irgendwelchen Gründen nicht mit Dampf beaufschlagt ist, hingegen der Abhitzedampferzeuger 7 und der Kondensator 13 in Betrieb sind, bietet sich vorzugsweise folgendes Vorgehen an: Entsprechend dem Stillstand der Dampfturbine ist das Isolations-Ventil 30 in der Anzapfleitung der Hochdruckturbine 9 sowie selbstverständlich das Hochdruck-Einlassventil 43 in der Frischdampfleitung 24 geschlossen. Kühldampf kann nunmehr vom Überhitzeraustritt entnommen werden. Hierzu zweigt von der Frischdampfleitung 24 oder direkt vom Austrittssammler des Überhitzers 23 eine Kühldampfleitung 44 ab. In dieser Kühldampfleitung, welche in die Kühlzuleitung 32 mündet, ist ein Bypassventil 45 angeordnet. Es versteht sich, dass in der Leitung 44 Mittel angeordnet sind, die den Dampfzustand an jenen in den zu kühlenden Gasturbinenkomponenten anpassen, um Thermoschocks im Kühlsystem zu vermeiden. Dies ist insbesondere wichtig bei Schnellumschaltungen, die erforderlich werden, wenn die Dampfturbine leer laufen soll. Ggfs. muss der Druck reduziert werden und die Temperatur abgesenkt werden. Hierzu kann das Bypassventil 44 als Druckreduzierventil ausgeführt sein und mit Wassereinspritzmitteln versehen sein. Nach vollzogener Kühlung in der Gasturbine wird dieser Dampf wie oben beschrieben in den Kondensator 13 abgeleitet.

Nicht nur bei Ausfall des Primärkühlsystems können die beschriebenen Sekundärsysteme eingesetzt werden. Soll beispielsweise die Anlage kurzfristig überlastet werden, so bietet sich folgende Fahrweise an: Das Isolations-Ventil 30 wird so geregelt, dass der Hochdruckturbine 9 weniger Anzapfdampf als für Kühlzwecke benötigt entnommen wird. Dieser nichtentnommene Dampf kann in der Folge in der Dampfturbine arbeitsleistend entspannt werden. Die fehlende Kühldampfmenge wird über die Bypassleitung 44 zugemischt. Hierbei besteht die Möglichkeit, nur deren Temperatur zu senken - u.U. auf etwas tiefere Temperatur als jene des Anzapfdampfes -, indes das Kühlsystem mit erhöhtem Druck zu beaufschiagen. Dadurch könnte zur Leistungssteigerung die gekühlte Brennkammer kurzfristig mit erhöhter Feuerungstemparatur gefahren werden.

Steht überhaupt kein Dampf zu Kühlzwecken zur Verfügung, so muss auf reine Luftkühlung umgeschaltet werden. Für die zu Kühlzwecken gebrauchte Luft zweigt von einer Zwischenstelle (nicht dargestellt) und/oder vom Austritt des Verdichters 2 eine mit einem Ventil 47 versehene Kühlluftleitung 46 ab. In der Regel ist in dieser Kühlluftleitung ein Rückkühler 48 angeordnet. Von dessen Luftaustrittsstutzen mündet die Kühlluftleitung in die Kühlzuleitung 32, wobei das dampfseitige Einlassventil 31 selbstverständlich geschlossen ist. Nach Vollzug ihrer Kühlfunktion wird die nunmehr aufgeheizte Luft bei geschlossenem Auslassventil 33 und offenem Absperrventil 42 über die Leitung 41 in die Atmosphäre verworfen.

Der Rückkühler 48 für die Kühlluft einer Gasturbine ist in der Regel ein konvektives Wärmeübertragersystem mit hohem thermodynamischen Nutzungsgrad für hohe Luft-und Flüssigkeitstemperaturen und hohe Luftdrücke. Die spezielle thermohydraulische Anforderung an diese Klasse von Apparaten ist dabei folgende: hohe Lufteintrittstemperatur zwischen 300-530°C, hoher Druck auf der Luftseite zwischen 20 und 35 bar, je nach verwendeten System hoher oder niedriger Druck auf der Flüssigkeitseite, geringe luft - und flüssigkeitsseitige Druckverluste und relativ hohe Aufwärmspanne der Flüssigkeit bis zu 200°C im Sinne der Wärmerekuperation. Insbesondere wird eine gute Regelbarkeit der Kühllufttemperatur angestrebt.

Es versteht sich, dass die im Kühler 48 anfallende Wärme verschiedenen Verbrauchern, beispielsweise Heisswasser- oder Dampferzeugern zugeführt werden kann oder zur Brennstoffvorwärmung herangezogen werden kann. Weiter können folgende Verbraucher mit der Wärme versorgt werden: z. B. ein Dampferzeuger zum Zwecke der Dampfeinspritzung zur Leistungsteigerung der Gasturbine, ein Ölvorwärmer bei sehr niedrigen Aussentemperaturen, ein Wasservorwärmer zum Zwecke der Wassereinspritzung in die Brennkammer bei Ölbetrieb zur Reduktion der Stickoxyde. Desweiteren könnte im Kombibetrieb auch das Speisewasser des Abhitzekessels 7 vorgewärmt werden.

Selbstverständlich ist die Erfindung nicht auf die gezeigte und beschriebene Ausführungsform beschränkt. Sie ist grundsätzlich unabhängig von der Art des verwendeten Dampferzeugers. In Abweichung zur gezeigten Dampfentnahme aus dem Sammler des Überhitzers 23 könnte innerhalb des Kessels an geeigneter Stelle auch eine separate Rohrsschleife zur Kühldampferzeugung vorgesehen werden. Ist die Hochdruckstufe wie das Niederdrucksystem auch als Umlaufssystem mit Trommel ausgeführt, so kann der Dampf auch dieser Trommel entnommen werden. In diesem Fall wäre die Trommel entsprechend zu dimensionieren.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Abscheideflasche
- 27: Zwischenüberhitzer
- 28: Niederdruck-Dampfleitung
- 29: Abschlämmleitung
- 30: Isolations-Ventil in 32
- 31: Einlassventil in 32
- 32: Kühlzuleitung
- 33: Auslassventil
- 34: Kühlableitung
- 35: Isolations-Ventil in 34
- 36: Hilfsdampferzeuger
- 37: Absperrventil in 37
- 38: Leitung von 36 zu 32
- 39: Absperrventil in 40
- 40: Leitung zu 13
- 41: Leitung
- 42: Absperrventil in 41
- 43: Hochdruck-Einlassventil
- 44: Kühldampfleitung
- 45: Bypassventil in 44
- 46: Kühlluftleitung
- 47: Ventil in 47
- 48: Rückkühler

## Patentansprüche

1. Kombinierte Kraftwerksanlage mit einer Gasturbine (2-4) und einer Dampfturbine (9-11), bei welcher die Abgase der Gasturbine (4) ihre Restwärme über das in einem Abhitzekessel (7) strömende Arbeitsmittel an die Dampfturbine abgeben, und wobei den zu kühlenden Gasturbinenkomponenten in einem zumindest vorzugsweise geschlossenen Primärkühlkreislauf (32, 34) Anzapfdampf aus der Dampfturbine zugeführt wird,
dadurch gekennzeichnet,
die Anlage mindestens einen weiteren Sekundärkühlkreis (36-38, 44-45, 46-48) aufweist, der in Wirkverbindung mit dem Primärkühlkreislauf (32, 34) steht und bei Ausfall dieses Primärkühlkreislaufes betrieben wird, wobei stromabwärts der zu kühlenden Gasturbinenkomponenten Mittel zum getrennten Abführen des Kühlmittels vorgesehen sind.

2. Anlage nach Anspruch 1, dadurch gekennzeichnet, dass die Mittel zum getrennten Abführen des Kühlmittels eine absperrbare Leitung (40) zum Kondensator (13) der Dampfturbine umfassen, welche von der Kühlableitung (34) des Primärkühlkreislaufes abzweigt.

3. Anlage nach Anspruch 1, dadurch gekennzeichnet, dass die Mittel zum getrennten Abführen des Kühlmittels eine absperrbare Leitung (41) zur Atmosphäre umfassen, welche unmittelbar stromabwärts der zu kühlenden Komponenten von der Kühlableitung (34) des Primärkühlkreislaufes abzweigt.

4. Anlage nach Anspruch 2 oder 3, dadurch gekennzeichnet, dass der Sekundärkühlkreis eine absperrbare Kühldampfleitung (44) umfasst, welche den Abhitzekessel (7) mit der Kühlzuleitung (32) des Primärkühlkreislaufes verbindet, und dass in der Kühldampfleitung (44) Mittel zum Anpassen des Dampfzustandes an den im Kühlsystem erforderlichen Zustand vorgesehen sind.

5. Anlage nach Anspruch 2 oder 3, dadurch gekennzeichnet, dass der Sekundärkühlkreis einen Hilfsdampferzeuger (36) umfasst, welcher über eine absperrbare Leitung (38) mit der Kühlzuleitung (32) des Primärkühlkreislaufes verbunden ist, und dass in der Kühldampfleitung (44) Mittel zum Anpassen des Dampfzustandes an den im Kühlsystem erforderlichen Zustand vorgesehen sind.

6. Anlage nach Anspruch 3, dadurch gekennzeichnet, dass der Sekundärkühlkreis eine absperrbare Kühlluftleitung (46) umfasst, welche vom Verdichter (4) der Gasturbine abzweigt und unmittelbar stromaufwärts der zu kühlenden Komponenten mit der Kühlzuleitung (32) des Primärkühlkreislaufes verbunden ist, und dass in der Kühlluftleitung (46) Mittel (48) zum Rückkühlen der verdichteten Luft vorgesehen sind.
